# EUROPEAN PATENT APPLICATION

(11) **EP 3 550 326 A1**
(43) Date of publication of application: **09.10.2019**
(21) Application number: 19161365.2
(22) Date of filing: 07.03.2019
(51) Int. Cl.: G01S 7/497

(54) **CALIBRATION OF A SENSOR ARRANGEMENT**

(30) Priority: 03.04.2018 EP 18165376
(71) Applicant: Continental Automotive GmbH, 30165 Hannover (DE)
(72) Inventor: Silva, Carlos, Eastbourne, BN21 3EJ (GB); Sell, Martin, Brighton, BN1 5NH (GB); Graham-Shaw, Arran, Brighton, BN2 3FQ (GB)
(74) Representative: Bobbert, Christiana

(57) **Abstract**

The invention provides a method for calibrating a sensor arrangement (1) . The method first obtains (Sl) environment data by at least two sensors of the sensor arrangement. Further, surface points are determined (S2), which are part of a flat surface, in the obtained environment data separately for each sensor of the sensor arrangement. Then the method fits (S3) planes through the determined surface points, separately for each sensor of the sensor arrangement. Furthermore, the methods determines (S4), for each sensor of the sensor arrangement, coordinates of intersection points, at which three different planes intersect. Finally, the sensor arrangement is calibrated and extrinsic parameters of the sensors are determined by matching corresponding intersection points.

## Description

The invention relates to a method for calibrating a sensor arrangement, a sensor arrangement, a vehicle comprising the sensor arrangement, a computer program element and a computer-readable medium.

In a modern vehicle a plurality of sensors are installed or mounted onto the vehicle to support a driver of the vehicle during driving. To achieve a proper functionality of the sensors, these may be calibrated in view of the vehicle coordinate system (main coordinate system), such that the obtained data of each one of the sensors may be compared to each other or that the obtained data may be combined. Further, also LiDAR sensors may be used in vehicles for different applications and in most cases the extrinsic parameters of the sensor within a system should be defined. The common approach to calibrate and therefore to determine extrinsic parameters is to use predefined targets, pattern or markers.

It may be an object to provide an efficient sensor calibration.

The object is solved with the subject matter of the independent claims, wherein further embodiments are incorporated in the dependent claims.

Some calibration methods may not be flexible and may depend on other sensors and/or defined targets, pattern or markers to calibrate a sensor arrangement. It may be advantageous to use the sensors of the sensor arrangement to gather ground truth information to calibrate the sensor arrangement. Sensors may be independently calibrated to avoid a bias towards any other sensor within the system. Further, the calibration may be also flexible as the configuration, for example the position of the sole sensors, of the sensor arrangement may be changed quickly. It may not be convenient to spend time mounting targets around the system to calibrate the sensors every time the configuration of the sensor arrangement is changed.

A first aspect provides a method for calibrating a sensor arrangement, in particular the sensor arrangement consists of LiDAR sensors. The method comprise the following steps:
- obtaining environment data by at least two sensors of the sensor arrangement;
- determining surface points, which are part of a flat surface (in reality), in the obtained environment data, separately for each sensor of the sensor arrangement;
- fitting planes through the determined surface points, separately for each sensor of the sensor arrangement;
- determining, for each sensor of the sensor arrangement, coordinates of intersection points, at which three flat planes intersect;
- calibrating the sensor arrangement and determining extrinsic parameters of the at least two sensors by matching corresponding intersection points.

The obtained environment data may be depth information or data or a depth image, i.e., a distance between different objects and the sensor. Such depth information may be obtained by a LiDAR sensor, a RADAR sensor or an ultrasonic sensor. The obtained environment data comprises distance information, i.e. depth information, depending from a scanning angle, as well as the coordinates of the point in space (3D coordinates in Cartesian coordinates, e.g. x-, y- and z- value) which reflects the signal of the sensor. Thus, it should be noted that each sensor is able to determine depth information in cylindrical coordinates as well as points in space in relation to the sensor coordinate system which is in Cartesian coordinates. Further, it should be noted that based on the obtained environment data (single points and the distance to these points) a function of the depth over the scanning angle is determined. Further, this function may be calculated for each layer of the sensor of the sensor arrangement separately. Since the sensor may comprise 16 layers, 16 laser beams scanning the scene at the same time and therefore, 16 functions may be calculated. Further, each of this calculated functions may be derivated according to the depth to determine surface points in the data obtained in this particular layer. This function is useful to reduce noise in the environment data as well as to calculate the first derivative according to the depth later on. Furthermore, the used LiDAR sensor maybe are 360° LiDAR sensors, which comprise an array of sensors each of which scans another layer, i.e. in another height. The layers of the sensor are one above the other in height direction (Z-axis). Also the each of the sensors of the sensor arrangement may produce further measurement data such as time of flight or reflection intensity. However, LiDAR sensors and their produced measurement data are well known in the art.

According to an embodiment, robust features in the scene (i.e. the obtained or acquired image) are obtained by at least two sensors of the sensor arrangement, for example a LiDAR sensor. Further, the features are also identified as such, wherein the features in the scene may be used to calibrate the sensor arrangement and therefore to determine the extrinsic parameters of the sensors. The features may be walls or ceilings, which usually are flat surfaces. The calibration itself may be performed using a minimization algorithm, for example the Levenberg-Marquardt algorithm or minimizing the root means square. For calibrating the sensors of the sensor arrangement, each one of the sensors may perform one or more of the following steps separately:
- Filter the obtained environment data to reduce noise in the obtained data. Further, the filtered obtained environment data is represented by a function of the depth over the scanning angle of the LiDAR sensor.
- Determine surface points, which are part of a flat surface, for example by calculating the first derivative according to the depth of this function. Thus, calculating the direction derivative according to the depth of the obtained function representing the depth over the scanning angle for each layer of the sensor of the sensor arrangement. The sections of the function only small changes in depth or the section of the function with constant changes of the depth are flat surfaces in reality. By calculating the first derivative of the function according to the depth, the sections of the function indicated above resulting in a low value (close to zero) in the first derivative or in a constant value. Therefore, by calculating the first derivative according to the depth, outliner points of the function may be easily determined and adjacent points with low value or the same value are likely to be points of a common flat surface, such as a wall or a ceiling. It should be noted that since LiDAR sensors use laser beams from a source, the distance to a flat surface in front of the LiDAR is not constant and therefore the deviation of the function is not equal to zero but close to zero. Thus, the derivative according to the depths is calculated
   to determine whether the section of the function and/or a single point of this function is part of a flat surface in the scene or not.

Further, the determined surface points may be used to define different planes. In other words, different planes are fitted through the determined surface points. Thus, planes are fitted thought the points that are identified as being surface points. As indicated above, the sensor also determines the coordinates of the points reflecting the signal of the sensor in Cartesian coordinates (3D-coordinates), such that based on these Cartesian coordinates the fitting of the planes may be performed. Further, if a plane is fitted through some surface points, it is subsequently checked whether other surface points are in this plane or not. It should be noted that a plane may be defined by three points in space, but a plane in the sense of the present invention should be defined by multiple points. The first derivative determines 3D points that may be are good candidates to be in a planar surface in the scene. The plane fitting groups 3D points that are in the same planar surface. Further, a plurality of planes are fitted through the surface points. In particular, the described method may need multiple walls or ceilings in the environment data to fit multiple planes through the surface points of the walls or ceilings. All intersection points, where three planes intersect, may be calculated based on the defined planes, wherein the intersection points may act as reference points. Further, the intersection points may be determined by calculating the intersection point between every possible combination of planes and subsequently review whether the calculated intersection point is part of the real world and not too far from the sensor arrangement (intersection points in the underground or at infinity are not respected). The correctness of the intersection points is verified mathematically. For doing so it may first be check if the point converges to infinity, further a threshold for the distance between the sensor and the point may be defined, which should not be exceeded, and last the null space of the points may be analysed. Alternatively, first the null space of the plane may be first analysed. If that passes, the intersection points are calculated and the points within the predefined distance threshold are kept for further performing the calibration method. Further, if a plane represents a wall or a ceiling the intersection point should not lie behind this plane in view of the sensor arrangement as than the intersection point may not be visible in reality. It should be noted that the intersection points should be corners in reality where walls and a ceiling interconnect. Then the reference points may be filtered to reduce noise.

In a subsequent step, for all sensors of the sensor arrangement, the calculated intersection points are transformed into the vehicle coordinate system (Cartesian coordinates) and the corresponding intersection points are matched. Further, a minimization algorithm may be used to minimize the errors in the extrinsic parameters of the sole sensors, such that the corresponding intersection points of the different sensors of the sensor arrangement are as much as possible at the same position in the vehicle coordinate system (main coordinate system). In other words, the sensor arrangement may be calibrated by minimizing the error between the corresponding intersection points of the at least two sensors of the sensor arrangement.

Further, normally the position of the sensors of the sensor arrangement in view of each other is roughly known in advance such that this information can be respected during determining the intersection points and during calibrating the sensor arrangement by matching the corresponding intersection points.

It should be understood that before and hereinafter described method needs more than three planes in the determined environment data. Therefore, the method is preferably performed within a building such as a garage or a storehouse.

Further, it should be understood that the term "surface points" describes points in space which belong to a flat surface in reality, such as a wall or a ceiling.

It should be noted that the term "depth" should be interpreted as distance from the sensor to an object, such as a wall or a ceiling, which reflects the laser beam of the LiDAR sensor. And der LiDAR sensor determines at the same time the depth and the 3D coordinate (Cartesian coordinate in the sensor coordinate system) of the point reflecting the laser beam.

Three planes may intersect all in one single point in space if the planes are not parallel to each other. Thus, a set of intersection points as reference points may be defined, which are consistent with the acquired scene, e.g. are corners and edges of a building.

The extrinsic parameters of the sensors may be a translation in x direction, a translation in y direction, a translation in z direction, a rotation around the x axis, a rotation around the y axis and a rotation around the z axis in view of the vehicle coordinate system (main coordinate system), all of which are defined in Cartesian coordinates.

The method for calibrating may be automatic, fast, reliable and may only require a rough initial configuration of the sensors of the sensor arrangement. Further, the calibration is flexible, as it does not require any specific targets, pattern or markers, since it uses the 3D structure of the obtained or acquired scene, and in particular, walls, ceilings and corner points. Thus, the calibration may be performed indoors using the walls and ceiling of the building as reference, but it can also be performed outdoors as long as sufficient planar structures are present in the obtained scene.

This may provide a fast and simple way to calibrate a plurality of sensors, such that the acquired or obtained data of each one of the sensors may be converted into the vehicle coordinate system (main coordinate system, in Cartesian coordinates). Thus, the calibration may determine the extrinsic parameters of each one of the sensors relative to the vehicle coordinate system. Thus, the by the sensors obtained objects may be transformed from the sensor coordinate system into the vehicle coordinate system.

The sensors of the sensor arrangement may comprise a plurality of layers, for example 16 layers. Each of the layers may cover a certain part in vertical direction. Further, the layers may comprise different densities, therefore it may be more difficult to match the points between sensors or between time frames or between the sensors and a camera. Further, the above and hereinafter described method may be performed layer by layer of the sensors of the sensor arrangement.

An image of a LiDAR sensor may be acquired over a certain time span, as typically a LiDAR sensor scans the environment circular starting at a position and going around (for example clockwise) to acquire a image of the environment, for example a 360° image or an 180° image. The opening angle in a vertical direction may be limited, for example 16°. Therefore, different layers of the LiDAR sensors may cover the vertical direction. Further, LiDAR sensors also determine the 3D coordinates (x-, y- and z-coordinate) of the point in space at which the laser beam is reflected. Thus, the point in space which reflects the signal of the sensor is known in Cartesian coordinates in view of the sensor coordinate system.

It should be noted that the sole sensors of the sensor arrangement should have at least a part of an overlapping field of view, such that intersection points are obtained by more than one sensor of the sensor arrangement at a given time.

Furthermore, the sensors may be configured to obtain up to 360°. Thus, the surface points may be detected by at least two sensors of the sensor arrangement.

It should be noted the intersecting points, defined by three intersecting planes, are physically (i.e. in reality) at the same position, as they represent corners and edges in the real word. Thus, for all the sensors, the intersection points should be at the same position in view of the vehicle coordinate system. Therefore, the determined coordinates of the intersection points from each sensor may be matched by amending or adjusting the extrinsic parameters of each one of the sensors, which will lead to a calibration of the sensors of the sensor arrangement.

The preceding and hereinafter described method for calibrating a sensor arrangement may be applied to a variety of different sensors, such as LiDAR sensors, ultrasonic sensors, radar sensor and/or a combination thereof.

According to an embodiment of the invention the method comprises the following steps:
First, environment data is obtained by a plurality of sensors of the sensor arrangement, i.e. depth images. The points of such a depth image may be described using Cartesian coordinates. Further, also the depth, thus the distance to the point from the sensor, is part of the environment data. Furthermore, the depth images may be easily converted into the vehicle coordinate system (main coordinate system for all sensors of the sensor arrangement).

Subsequently, in each depth image of each sensor, surface points are determined. These surface points may be part of a flat surface in reality, such as a wall or a ceiling. For determining the surface points, a function may be calculated which represents the depth over the scanning angle of the sensor. This function is subsequently deviated according to the depth to determine the surface points which have low values in the derivation.

Further, a plurality of planes are fitted through the surface points. These planes should represent walls or ceilings in reality.

Furthermore, intersection points, at which at least three of the fitted planes intersect with each other, are determined. The intersection points are determined for each sensor separately. Also every possible intersection point between three determined planes is calculated and subsequently it is checked whether this intersection point is also present in the real word (not in the underground, at infinity or behind a determined wall or ceiling in view of the sensor of the sensor arrangement). These intersection points may represent corners in reality.

Last, the determined intersection points of different sensors of the sensor arrangement are matched to calibrate the sensors of the sensor arrangement in view of each other.

According to an embodiment, the step of determining the surface points in the obtained environment data comprises calculating the first derivative according to the depth of the obtained environment data, wherein the obtained environment data is represented by a function of the depth over a scanning angle of the sensor-arrangement. This function may be determined for each layer of the sensor of the sensor arrangement separately.

For determine surface points, which are part of a flat surface, the function of the depth over the scanning angle representing the obtained environment data may be differentiated according to the depth. By doing so, adjacent points of the function, which are part of the same flat surface show a constant or a small value . Thus, all points, which derivation is small (close to zero) may be a part of a flat surface, such as a wall or a ceiling of a building.

According to another embodiment, before the step of determining the surface points, the obtained environment data is filtered to reduce noise in the obtained environment data and the function of the depth over the scanning angle is obtained.

Thus, to sorting out unplausible low or high measurement values (depths or distances) in the obtained environment data, the obtained or acquired data may be filtered.

According to an embodiment, the step of calibrating extrinsic parameters is performed by minimizing the root means square of an error of the corresponding intersection points in the vehicle coordinate system.

Thus, for minimizing the error between the intersection points of the at least two sensors, the root means square may be calculated and minimized by amending or adjusting the extrinsic parameters of the sensors. Then the result shows a minimized error and therefore, an optimized calibration.

According to an embodiment, the step of calibrating extrinsic parameters is performed by minimizing the errors of the corresponding intersection points with the aid of the Levenberg-Marquardt algorithm.

Besides the root means square, also the Levenberg-Marquardt algorithm may be used to minimize the error between intersection points of the sole sensors in the vehicle coordinate system. According to another embodiment, the sensor of the sensors arrangement comprise multiple layers, wherein the method is performed separately for each layer of the sensors.

The field of view of one sensor of the sensor arrangement may be fragmented in the vertical direction. This fragments may be denoted as layers. Each of the layers may cover a certain part in vertical direction, i.e. 16°. Further, the layers may also comprises overlapping areas in the vertical direction.

If the sensors comprises multiple layers, the method may be performed separately for each layer, and for each layer of the sensor the extrinsic parameters are determined by minimizing the error between the matched corresponding intersection points.

Another aspect provides a sensor arrangement for a vehicle. The sensor arrangement comprise at least two sensors, for example LiDAR sensors, and a control module. The control module is configured to calibrate the sensor arrangement and to determine the extrinsic parameters of the at least two sensors according to the method described above and hereinafter.

The sensor arrangement may comprise two or more sensors and these sensors may be calibrated such that the value from one of the sensors may be transferred to the vehicle coordinate system or complemented by one of the other sensors. This object may be achieved by performing the above and hereinafter described method.

According to an embodiment, each one of the sensors comprises multiple layers, and wherein the control module is configured to calibrate the sensors layer by layer.

In another aspect, a vehicle comprising the sensor arrangement is provided.

The vehicle may, for example, be a motor vehicle, such as a car, bus or truck, but also a ship, a boat, an aircraft or a helicopter.

According to another aspect, there is provided a computer program element controlling a sensor arrangement as previously described which, in the computer program element is executed by a control module, is configured to perform the method steps as previously described.

There is also provided a computer readable medium having stored the computer element as previously described.

The above aspects and examples will become apparent from and be elucidated with reference to the embodiments described hereinafter.

Exemplary embodiments will be described in the following with reference to the following drawings, which are diagrammatic and not to scale:
Fig. 1 shows a vehicle in the top view with a sensor arrangement according to an embodiment.
Fig. 2 shows a vehicle in a side view with a sensor arrangement according to an embodiment.
Fig. 3 shows a flow diagram of a method for calibrating a sensor arrangement according to an embodiment.
Figs. 4a to 4c shows a diagram of obtained surface points and detected wall by one sensor of the sensor arrangement according to an embodiment.
Fig. 5 shows a diagram with fitted planes through the surface points of one sensor of the sensor arrangement according to an embodiment.
Fig. 6 shows a diagram, in which planes are fitted through the surface points according to an embodiment.
Fig. 7 shows a plurality of diagrams generated from the obtained environment data of a sensor of the sensor arrangement according to an embodiment.
Fig. 8 shows further diagrams illustrating the processing of the obtained environment data according to an embodiment.

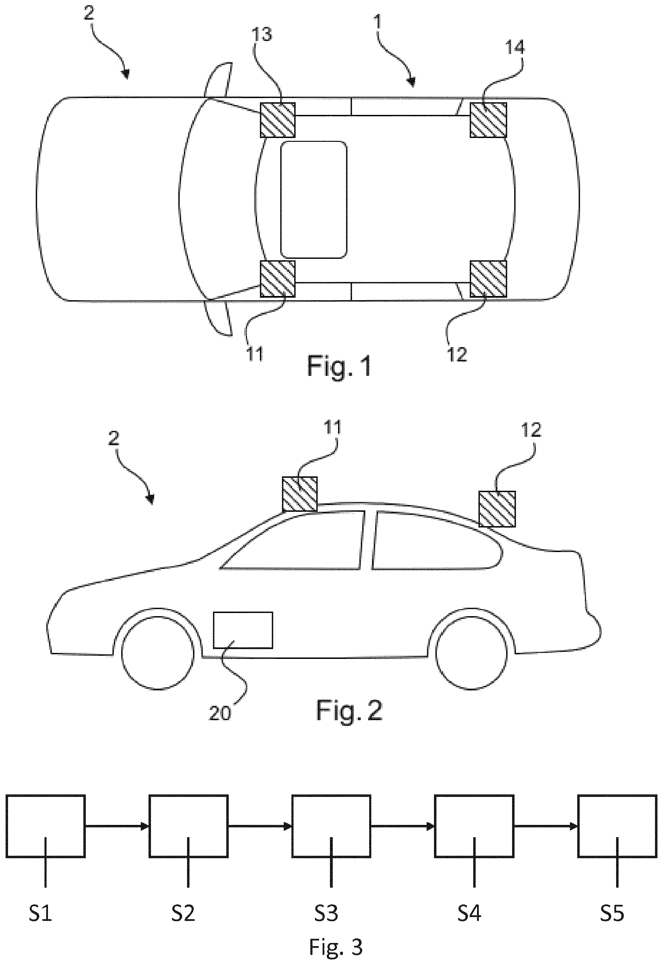

Fig. 1 shows a vehicle 2 with a sensor arrangement 1. The sensor arrangement 1 comprises four sensors 11, 12, 13, 14, for example LiDAR sensors, wherein in each corner of the roof of the vehicle 2 a sensor 11, 12, 13, 14 is arranged. These sensors 11, 12, 13, 14 have to be calibrated in view of the vehicle coordinate system and/or in view to the other sensors of the sensor arrangement 1 or the vehicle 2. In particular, the extrinsic parameters of the sensors 11, 12, 13, 14 have to be determined, amended and/or adjusted in view of the vehicle coordinate system to calibrate the sensor arrangement 1. During the calibrations, the positions and the orientation of the coordinate systems of each one of the sensors 11, 12, 13, 14 are determined and adjusted in view of the vehicle coordinate system. By doing so, measurement values, such as depth or distance, of each sensor 11, 12, 13, 14 may be compared and/or combined to another sensor 11, 12, 13, 14 of the sensor arrangement 1. The calibration may be performed based on a method, which starts with a rough estimation of the position and orientation of each one of the sensors 11, 12, 13, 14. Then each one of the sensors obtains environment data, such as depth data (distance from the sensor to the object which reflects the laser beam of the sensor) of the environment as well as 3D coordinates of the points in space at which the laser beam is reflected. Further, the obtained data may be filtered to reduce noise in the obtained data and a function of the depth over or dependent of the scanning angle is determined. In the obtained data, surface points, which are part of a flat surface, are determined. The surface points may be determined by calculating the first derivative (differentiate according to depth) of the function of the depth over the scanning angle , as the difference in depth between two adjacent points of a common flat surface is small or constant (close to zero) . Through these determined surface points a plurality of planes are fitted, which represent the surface, for example a wall or a ceiling. The intersection points of the planes, at which three planes intersect in one single point, may be determined separately for each sensor 11, 12, 13, 14 and may be used as reference points for calibrating the sensor arrangement 1. In a subsequent step, corresponding intersection points of each one of the sensors 11, 12, 13, 14 are transformed into a common coordinate system, such as the vehicle coordinate system, and matched by amending, modifying or adjusting the extrinsic parameters of each one of the sensors such that the error between the corresponding intersection points is minimized. For minimizing, the root means square between the corresponding intersection points may be minimized or the minimization may be performed by the Levenberg-Marquardt algorithm. After the method is performed, the coordinate systems of each one of the sensors in view of the vehicle coordinate system are calibrated, such that objects from one coordinate system may be transformed into the other coordinate system and/or the vehicle coordinate system. Thus, a real object is located at the same location in the vehicle coordinate system based on two or more different sensors 11, 12, 13, 14 of the sensor arrangement 1. This calibration method is fast and reliable and does not need a predefined pattern or markers, as it uses features in the obtained scene. It should be noted that two or more sensors 11, 12, 13, 14 of the sensor arrangement 1 should obtain the same features to calculate corresponding intersection points in the scene. Thus, the sensor should have, at least partially, an overlapping field of view. Further, the method can be performed or executed by a control module of the vehicle 2.

Alternatively or in addition the sole sensors 11, 12, 13, 14 may comprise multiple layers. In this case, the method may be performed for each layer separately. Thus, the method may be performed layer by layer.

It should be noted that the method may be performed indoors, like in a garage, but is not limited to. Since the method uses flat surfaces as features in the scene, the obtained environment data should comprise sufficiently flat surfaces.

Fig. 2 shows a vehicle 2 with a control module 20 and two sensors 11, 12 in a side view. The control module 20 may perform the above and hereinafter described method for calibrating the sensor arrangement. The control module 20 may perform the method for calibrating the sensor arrangement in predefined time intervals, such as every day, week or month, or the method may be triggered by replacing one of the sensors of the sensor arrangement 1.

Fig. 3 shows a flow diagram of a method for calibrating a sensor arrangement. In the first step S1, at least two sensors of the sensor arrangement (for example LiDAR sensors) obtain data of the environment (depth information). In step S2, surface points are determined (for each sensor), wherein the surface points are part of a flat surface such as a wall or a ceiling. In step S3, planes are fitted through the determined surface points of each sensor. Then, in step S4, coordinates of intersection points are determined, at which three different planes (defined in step S3) intersect. In step S5, the sensor arrangement is calibrated and the extrinsic parameters of each one of the sensors of the sensor arrangement are determined, amended and/or adjusted by matching the corresponding intersection points of the different sensors of the sensor arrangement.

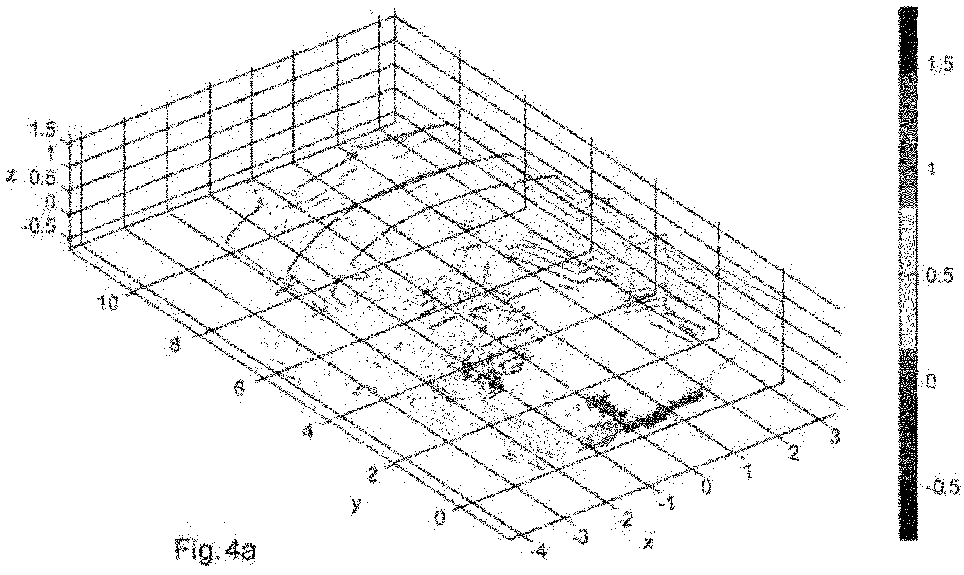

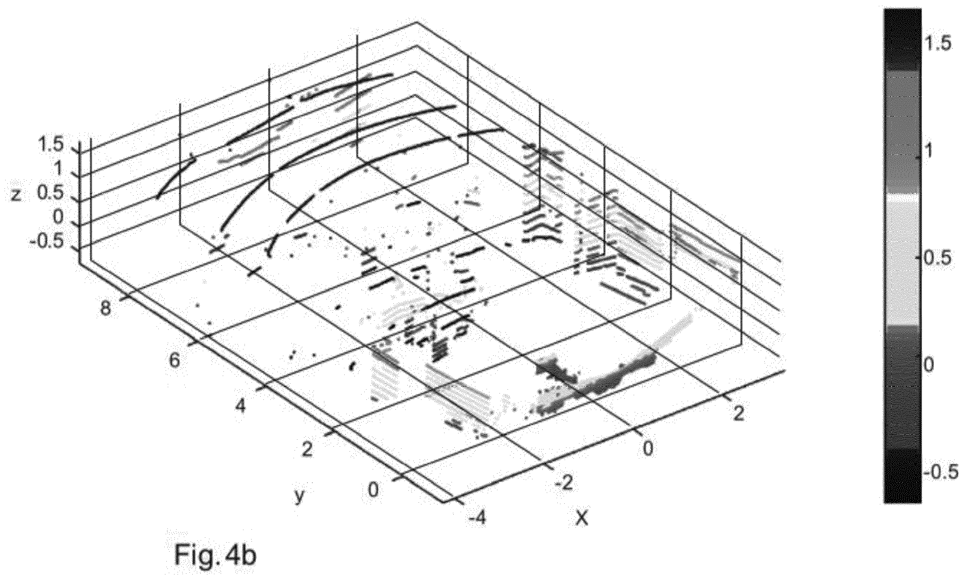

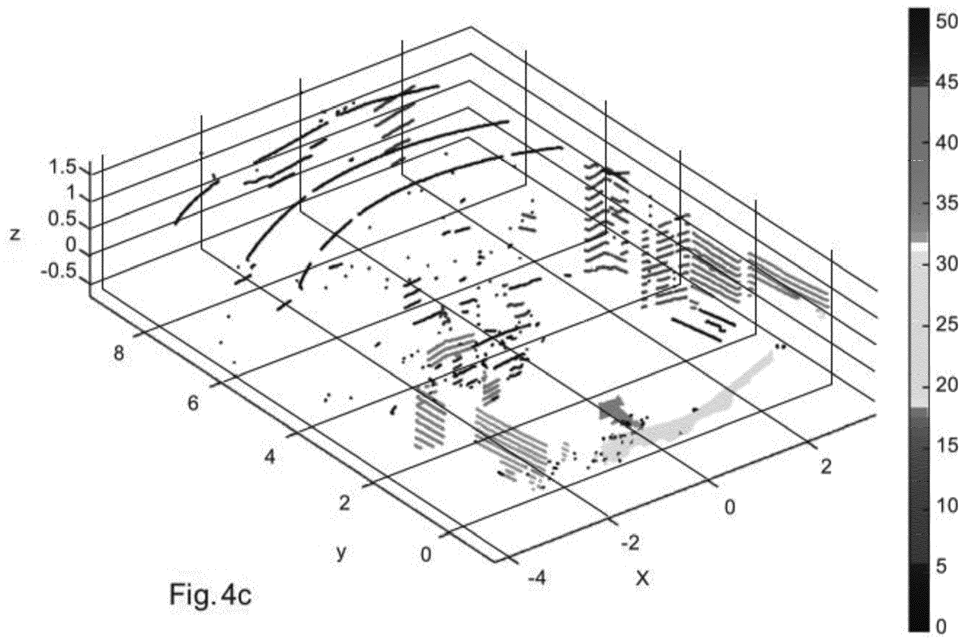

Fig. 4a shows a diagram of obtained environment data of a sensor of the sensor arrangement layer by layer. In Fig. 4b only surface points, which are a part of a flat surface are represented. Thus, the detected points from Fig. 4a were determined as surface points. The coordinate axis x, y, z define the space around the vehicle and the scale represents the distance in meters. The surface points are represented in different shades of grey according to the layer of the sensor. Further, the sensor arrangement is located indoors, thus, several surface points may be determined by the sensor, which are part of the walls and the ceiling. A similar representation may be determined for each one of the sensors of the sensor arrangement. In Fig. 4c the surface points of each layer of the sensor are assigned to common surfaces. In Fig. 4c each surface point belonging to the same surface is represented by the same shade of grey.

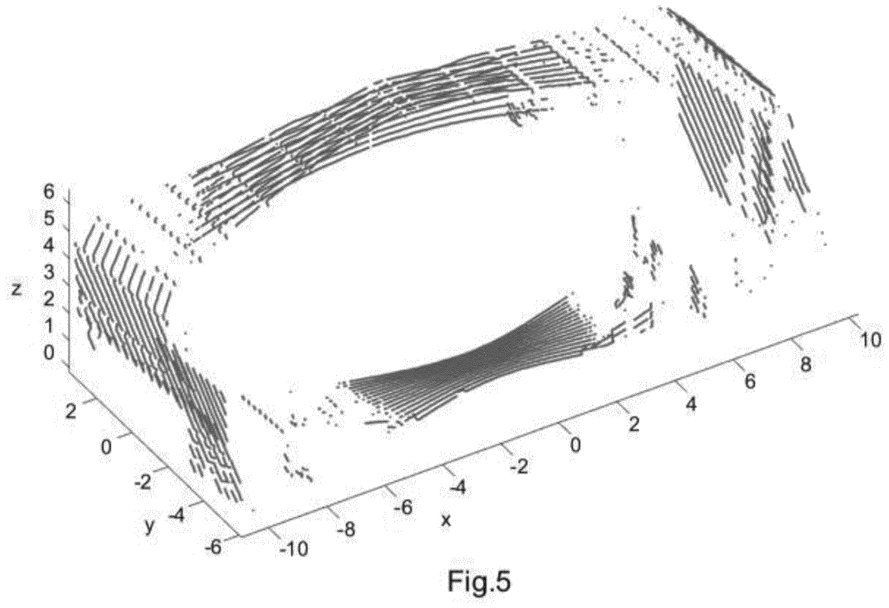

Fig. 5 shows a diagram with detected surfaces, which are determined by fitting a plane through the determined surface points from one sensor of the sensor arrangement.

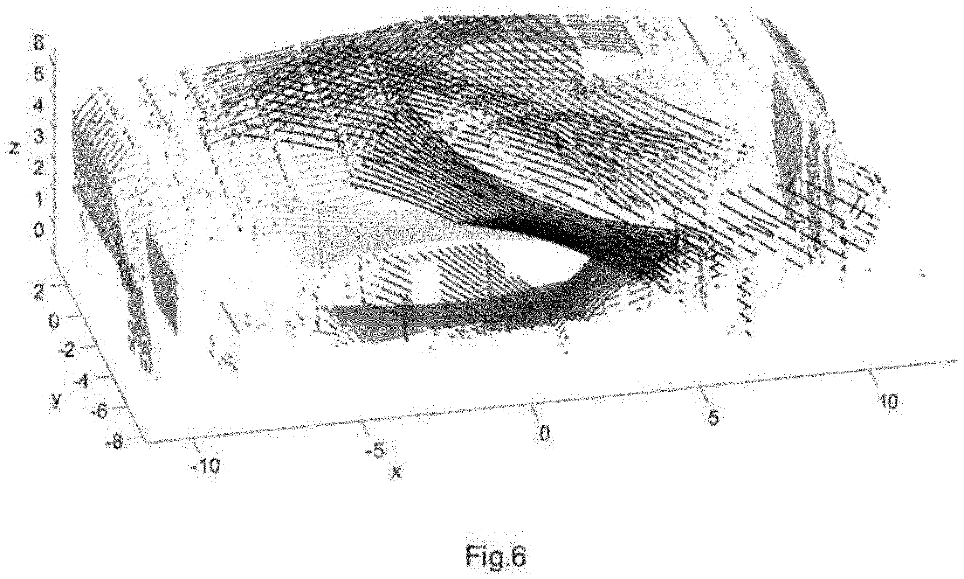

Fig. 6 shows a diagram in which all planes of all sensors of the sensor arrangement are fitted through the surface points, which are represented in Figs. 4a to 4c and Fig. 5. Each of the planes is represented by another shading or pattern. Further, it is shown that the different planes have a different orientation in the space, which is defined by the coordinate axis x, y, z. The planes may represent a wall or a ceiling of the environment of the sensor. Further, intersection points, which are defined by three planes are observable in Fig. 6. These intersection points may be used to calibrate the sensors of the sensor arrangement and determining the extrinsic parameters of the sensors if the sensor arrangement by matching the corresponding intersection points between the multiple sensors of the sensor arrangement.

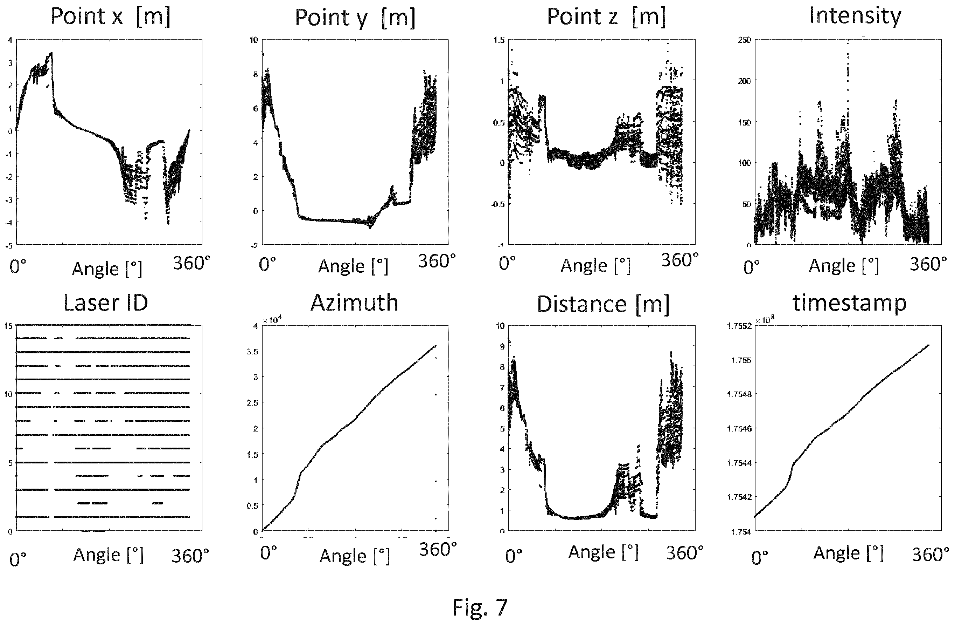

Fig. 7 shows eight diagrams all of which are based on the obtained environment data from the sensor, wherein the environment data for generating these diagrams are obtained simultaneously. The x-axis of the diagrams is the scanning angle of the sensor starting by 0° going to 360° (thus completely around). Starting at the left upper diagram going to the right, the three first diagrams show the distances (depth) in meters of the sensor to the object which reflects the laser beam of the sensor over the scanning angle. This distance is plotted in meters [m] separately for each Cartesian coordinate axis, thus, x, y and z, wherein the x-axis of the sensor corresponds to the width of the vehicle, the y-axis of the sensor corresponds to the length of the vehicle and the z-axis of the sensor corresponds to the height of the vehicle. Further, the sensor also captures the intensity of the reflected laser beam, which is represented by the diagram in the upper right corner. In the lower left corner the different layers of the sensor are represented, and it can be seen, that the sensor comprises 16 different layers (starting at 0) . Next to the diagram representing the layers, the azimuth over the scanning angle is represented. It can be seen that the azimuth is constantly growing over the scanning angle. The diagram on the lower right middle represents the distance from the sensor to the object reflecting the laser beam in meters. Further, this diagram is in cylindrical coordinates and therefore a combination of the diagrams "Point x" and "Point y", which are explained at the beginning of this paragraph. The diagram in the lower right corner represents the time over the angle and since the sensors scans the environment starting at 0° going to 360°, it is not surprising that the time constantly increases over the scanning angle.

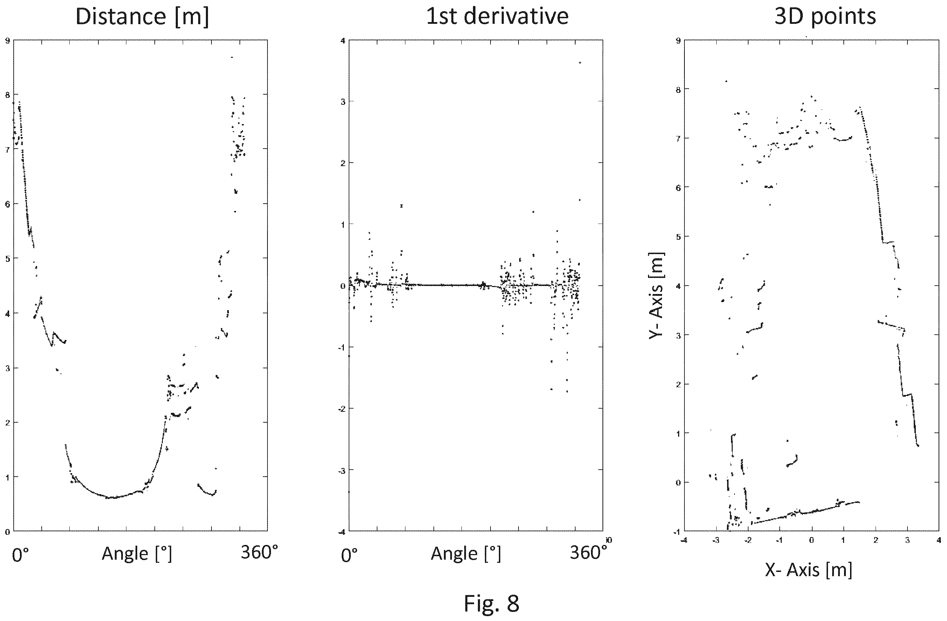

Fig. 8 shows further diagrams of the obtained environment data from the sensor over the scanning angle. In the left diagram the distance (depth) in meters between the sensor and the object reflecting the laser beam is represented, which corresponds to the lower middle right diagram of Fig. 7. The diagram in the middle shows the calculated first derivative of the environment data of the left diagram according to the depth. In the middle diagram it can be seen that the points close to zero may be part of a flat surface in reality, i.e. the obtained scene. However, the points in the middle diagram, which have different values to zero or have an aberration in view of zero belong to points, which may not be part of a flat surface. These points are more likely objects before the wall or the ceiling and are not taken into account during calibrating the sensor arrangement. The right diagram shows to x-y-plane from above. The points in a straight line are walls in reality and part of a flat surface. The points which belong to a flat surface are determined with the aid of the first derivative, since in the first derivative outliner points may be easily detected, as they show a bigger difference to zero.

## Claims

1. A method for calibrating a sensor arrangement (1), comprising the following steps:
- obtaining (S1) environment data by at least two sensors of the sensor arrangement;
- determining (S2) surface points, which are part of a flat surface, in the obtained environment data, separately for each sensor of the sensor arrangement;
- fitting (S3) planes through the determined surface points, separately for each sensor of the sensor arrangement;
- determining (S4), for each sensor of the sensor arrangement, coordinates of intersection points, at which three flat planes intersect;
- calibrating (S5) the sensor arrangement and determining extrinsic parameters of the sensors by matching corresponding intersection points.

2. The method according to claim 1,
wherein the step of determining (S2) the surface points in the obtained environment data comprises calculating the first derivative according to the depth of the obtained environment data, wherein the obtained environment data is represented by a function of the depth over a scanning angle of the sensor-arrangement.

3. The method according to claims 1 and 2,
wherein, before the step of determining (S2) the surface points, the obtained environment data is filtered to reduce noise in the obtained environment data and the function of the depth over the scanning angle is obtained.

4. The method according to any one of the preceding claims,
wherein the step of calibrating (S5) extrinsic parameters is performed by minimizing the root means square of an error of the corresponding intersection points.

5. The method according to any one of the preceding claims,
wherein the step of calibrating (S5) extrinsic parameters is performed by minimizing the errors of the corresponding intersection points with the aid of a Levenberg-Marquardt algorithm.

6. The method according to any one of the preceding claims,
wherein the sensors of the sensor arrangement compriase multiple layers,
wherein the method is performed separately for each layer of the sensors.

7. A sensor arrangement (1) for a vehicle (2), comprising:
- at least two sensors (11, 12, 13, 14); and
- a control module (20);
wherein the control module (20) is configured to calibrate the sensor arrangement (1) and to determine the extrinsic parameters of the at least two sensors (11, 12, 13, 14) according to the method according to any one of the claims 1 to 6.

8. The sensor arrangement (1) according to 7,
wherein each one of the sensors (11, 12, 13, 14) comprises multiple layers, and wherein the control module (20) is configured to calibrate the sensors (11, 12, 13, 14) layer by layer.

9. A vehicle (2) comprising a sensor arrangement (1) according to one of claims 7 and 8.

10. A computer program element for a sensor arrangement according to one of claims 7 and 8 and/or a vehicle according to claim 9, which, when executed by a processor, is configured to perform the method of any one of claims 1 to 6.

11. A computer readable medium having sored the computer program element according to claim 10.
